Europäisches Patentamt

(19) European Patent Office ·

Office européen des brevets

(11) Publication number: **0 132 146**
**B1**

(12) **EUROPEAN PATENT SPECIFICATION**

(45) Date of publication of patent specification: **24.05.89**

(21) Application number: **84304854.7**

(22) Date of filing: **17.07.84**

(51) Int. Cl.⁴: **E 06 B 3/86,** A 61 C 19/00,
G 02 B 27/02

(54) Cabinet door.

(30) Priority: **18.07.83 US 515009**

(43) Date of publication of application:
**23.01.85 Bulletin 85/04**

(45) Publication of the grant of the patent:
**24.05.89 Bulletin 89/21**

(84) Designated Contracting States:
**AT BE CH DE FR GB IT LI LU NL SE**

(56) References cited:
**DE-B-1 041 272**
**FR-A- 378 144**
**FR-A-1 137 833**
**FR-A-1 172 536**
**FR-A-1 344 373**
**FR-A-2 024 334**
**GB-A- 633 325**
**US-A-4 294 498**

(73) Proprietor: **SYNTEX (U.S.A.) INC.**
**3401 Hillview Avenue**
**Palo Alto, California 94304 (US)**

(72) Inventor: **Bartlett, Randall N.**
**113 McMillan Drive**
**Bay Minette Alabama 36507 (US)**
Inventor: **Sauls, John I.**
**Rte 3 Sunrise Valley 9**
**Leeds Alabama 35094 (US)**
Inventor: **McNew, James E.**
**109 West 10th Street**
**Bay Minette Alabama 36507 (US)**
Inventor: **Case, Robert**
**2650 Lakeview Apt. 3010**
**Chicago Illinois 60614 (US)**
Inventor: **Jenkins, Arden F.**
**1200 Mixon Avenue**
**Bay Minette Alabama 36507 (US)**

(74) Representative: **Armitage, Ian Michael et al**
**MEWBURN ELLIS & CO. 2/3 Cursitor Street**
**London EC4A 1BQ (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to the field of closures, more particularly to a two-piece plastic construction for a cabinet door which may also be used as a transparency viewer. A preferred use of the cabinet door and transparency viewer is in dental operatory settings.

The variety of door types and constructions is too great to discuss in detail. Materials such as wood, glass, metal, and thick sheets of plastic have all been used for cabinet doors in the past. In many instances, the weight of such doors has been a problem due to the thickness required for maintaining structural rigidity and for receiving attachment hardware.

In an attempt to overcome some problems US—A—4294298 teaches that double skinned thermoformed doors may be formed where the inner skin is secured to the outer skin by a peripheral flange.

However, a problem that has remained unsolved until the present invention has been the need for a separate unit for reading transparencies for example, an X-ray viewer in a dental operatory. Such units take up counter or shelf space in the operatory that could otherwise be used as working surfaces. Also, the electrical requirements of such units limit their positionability and storage when not in use.

According to the present invention there is provided a cabinet door comprising:

a first member having a planer main surface and a peripheral lip;

a second member having a planar main surface, a peripheral lip and a peripheral flange; and

securing means for attaching said second member's peripheral flange to said first member characterized in that the second member's peripheral flange is secured to the first member's planar main surface; transparency-viewing means being provided by a light-transmitting portion of said planar main surface of said first member holding means for supporting a transparency against said light-transmitting portion; and illumination means for providing light to said light-transmitting portion.

Preferably, the peripheral lip of the second member is disposed substantially at a right angle to the planar main surface and the peripheral flange is substantially parallel to the second member's planar main surface. Suitably the peripheral lip of the first member is disposed at an angle of between 45° and 90° to the planar main surface and the securing means is provided by double-sided adhesive tape.

The first and second members may be made of vacuum-formed plastics material, in particular the plastics material may be translucent thereby permitting limited visibility of any contents behind the door.

The side of the first member's planar main surface which is opposite to the second member may have a roughened, scratch-resistant surface and the light-transmitting portion comprises a cutaway portion in the planar main surface of the first member and a panel of opaque, light-transmitting material is disposed in the cutaway portion.

The holding means to hold transparencies against the light-transmitting portion are provided by an outwardly extending lip at the bottom end of the cutaway portion. The illumination means may be provided by a fluorescent lamp and fixture disposed between said first and second members. The fixture can be attached to an inner surface of the second member's planar main surface.

Where the cabinet door transparency viewer is provided with a cutaway portion, that cutaway portion may provide access to the illumination means and a removable panel may be provided to cover the cutaway portion. Where there is such a removable panel it may be of a clear light-transmitting material.

The second member may include a co-planar extension of its main surface, and closure means on the extension, the extension extending from a junction, between the second member's planar main surface, the bottom angled surface of the peripheral lip to approximately the bottom surface of the first member's peripheral lip when the first and second members are assembled together.

The closure means may be a strip of magnetic material. Where the illumination means is disposed between the first and second members the door may be hingeable between a first position in which the door closes the opening to the cabinet and presents its front surface for viewing of a transparency, and a second position in which the door is located within the cabinet adjacent a wall thereof so that light from the main surface of the second member illuminates the interior of the cabinet. The planar main surface of the second member may be provided with hinge-receiving means.

The following useful features are to be found in embodiments of the invention as described more particularly herein:

a two-piece, hollow construction for a cabinet door;

a lightweight cabinet door that can swing up and be slid back into a cabinet;

a lightweight cabinet door that is partially transparent to permit the contents of the cabinet to be viewed from the outside without opening the door, while at the same time obscuring those contents;

a two-piece plastic cabinet door that is easy and inexpensive to manufacture, lightweight, structurally rigid, and is somewhat transparent for viewing contents of a cabinet;

a transparency viewer that can be lifted up slid under a cabinet or shelf to be out of the way;

a transparency viewer that may be attached to the bottom of a shelf or cabinet to be lifted out and slid out of the way when not in use, and also serves as a task light for a work surface under it when it is in the stored position;

a cabinet door and transparency viewer, especially one in which said door may serve as a transparency viewer when in the down position and may serve as a task light or cabinet light when in the up position.

Other advantages and features of the present invention will become apparent with reference to the following description of the preferred embodiments and the appended claims and drawings.

In the drawings:

Fig. 1 is a front elevational view of a cabinet door and transparency viewer;

Fig. 2 is a back elevation view of the cabinet door and transparency viewer of Fig. 1, a portion of the back cover being broken away to better illustrate the lighting means;

Fig. 3 is a sectional view of the cabinet door and transparency viewer along line 9—9 in Fig. 1;

Fig. 4 is a sectional view of a cabinet door and transparency viewer along line 10—10 in Fig. 1;

Fig. 5 is a sectional elevational view of a cabinet door (omitting the light source) installed in a cabinet and shown in the down position; and

Fig. 6 is an enlarged section of the attachment portion illustrated within the circle of Fig. 5.

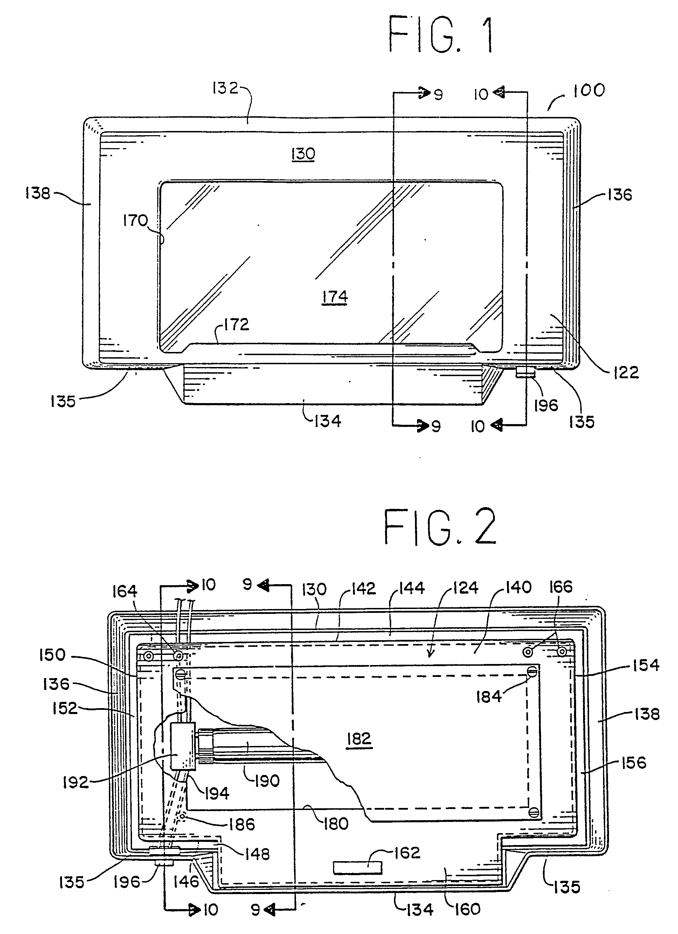

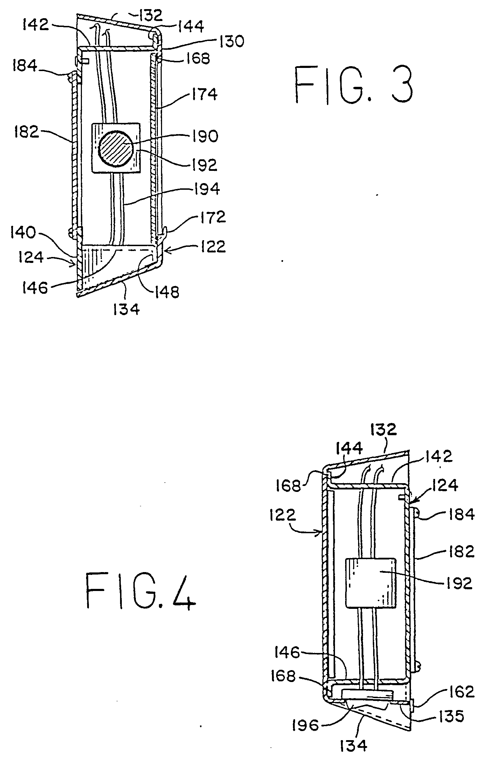

Referring to Figs. 1 to 4 of the drawings, a cabinet door transparency viewer 100 has a front member 122 and a back member 124. Both the front and back members may be made of a moldable plastic material (such as lexan) and are preferably vacuum formed to their respective shapes. The front member 122 has the general shape of a shallow rectangular tub, having a planar front surface 130, and a peripheral lip formed by a slanted top surface 132, a slanted bottom surface 134 having two recessed end portions 135, a slanted right side surface 136 and a slanted left side surface 138. Referring to Fig. 2, 3 and 4, back member 124 has a back planar surface 140, a top perpendicular surface 142, a top parallel surface 144, a bottom perpendicular surface 146, a bottom parallel surface 148, a right side perpendicular surface 150, a right side parallel surface 152, a left side perpendicular surface 154 and a left side parallel surface 156. An extended portion 160 of back planar surface 124 is provided with a securing member 162 such as the plate for a magnetic catch, or a portion of a mechanical latch.

The perpendicular surfaces 142, 146, 150 and 154 form a peripheral lip. The parallel surfaces 144, 148, 152 and 156 form a peripheral flange around the back member which corresponds to the peripheral area of front surface 130, so that the back member 124 may be placed within the front member 122 and secured to it by means such as an adhesive 168, double-sided tape, glue, cement, velcro, or a mechanical fastener. It is preferred to use double-sided tape.

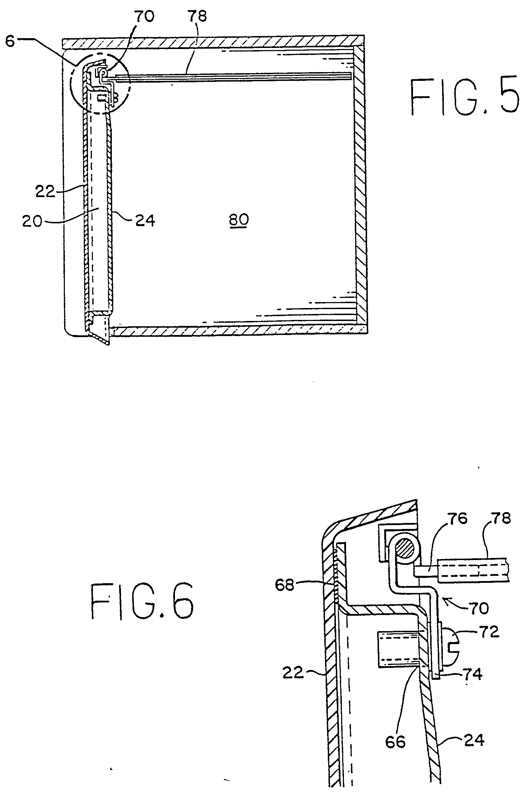

Two pairs of openings 164 and 166 are provided at the top right and left corners of back planar surface 140 for the attachment of hinges 70 by attachment means 72 such as a nut and bolt, a molly, or preferably an expanding bolt such as the "Plus-Nut" (sold by B. F. Goodrich). The hinge (as illustrated in Figs. 5 and 6) has two portions, a first portion 74 that is attached to the back member 124, and a second portion 76 that is received within a track 78 affixed inside a cabinet 80 in which the door is installed.

The door and viewer 100 may be used as a cabinet closure, such as the door 20, or may be used as a separate device suspended from beneath a cabinet to provide task lighting when in the up or stored position and to view transparencies such as X-ray when in the down position.

Front member 122 has a cutaway portion 170 in front of planar surface 130, which is provided with a protruding portion 172 at the bottom of cutaway portion 170 to serve as a transparency holder. A light-transmitting portion has an opaque translucent panel 174 disposed behind front planar surface 130 and surrounding cutaway portion 170; the opaque panel is adhered to the back of front member 122 by securing means 168, similar to the means used for attachment of back member 124.

The back planar surface of back member 124 also has a cutaway portion 180 which is covered by a light transmitting panel 182, the panel being attached by members 184, such as screws, which are received in openings 186 disposed in back planar surface 140. A replaceable bulb 190 and its associated fixture 192 are disposed between front member 122 and back member 124. The fixture is provided with wiring 194 leading to a switch 196 disposed in recessed portion 135 and to a power source (not shown).

## Claims

1. A cabinet door comprising: a first member (122) having a planar main surface (130) and a peripheral lip (132—138), a second member (124) having a planar main surface (140), a peripheral lip (142, 146, 150, 154) and a peripheral flange (144, 148, 152, 156), and securing means (162) for attaching said second member's (124) peripheral flange (144, 148, 152, 156) to said first member (122); characterised in that the second member's (24) peripheral flange (44, 48, 52, 56), is secured to the first member's (22) planar main surface (40), transparency-viewing means (100) being provided by a light-transmitting portion (174) of said planar main surface (130) of said first member (122), holding means (172) for supporting a transparency against said light-transmitting portion, and illumination means (190) for providing light to said light transmitting portion (174).

2. A cabinet door of claim 1 wherein said second member's peripheral lip is disposed susbtantially at a right angle to said planar main surface (140), and said peripheral flange is substantially parallel to said second member's planar main surface (140).

3. A cabinet door of claim 1 or claim 2 wherein said first member's peripheral lip is disposed at an angle of between 45° and 90° to said planar main surface (130).

4. A cabinet door of any one of claims 1, 2 and 3

wherein said securing means (168) is double-sided adhesive tape.

5. A cabinet door of any one of the preceding claims wherein said first member (122) and said second member (124) are made of vacuum-formed plastics material.

6. A cabinet door of claim 5 wherein said plastics material is translucent, permitting limited visibility of any contents behind said door.

7. A cabinet door of any one of the preceding claims wherein a side of said first member's planar main surface (130) opposite said second member (124) has a roughened, scratch-resistant surface.

8. A cabinet door of any one of the preceding claims wherein said second member (124) includes:

a co-planar extension (160) of said planar main surface (140), and

closure means (162) on said co-planar extension (160), said extension disposed from a junction, between said second member's planar main surface (140) and a bottom angled surface of said peripheral lip (146), to approximately a bottom surface of said first member's peripheral lip (134) when said first and second members (122, 124) are assembled together.

9. A cabinet door of claim 8 wherein said closure means (162) comprises a strip of magnetic material.

10. A cabinet door of any one of the preceding claims wherein said light-transmitting portion (174) comprises a cutaway portion (170) in said first member's planar main surface (130), and a panel (174) of opaque, light-transmitting material disposed adjacent said cutaway portion.

11. A cabinet door of any one of the preceding claims wherein said holding means (172) comprises an outwardly extending lip at the bottom end of said cutaway portion (170).

12. A cabinet door of any one of the preceding claims wherein said illumination means (190) comprises a fluorescent lamp and fixture disposed between said first and second members (122, 124).

13. A cabinet door of claim 12 wherein said fixture is attached to an inner surface of said second member's planar main surface (140).

14. A cabinet door of claim 13 wherein said second member's planar main surface (140) has a cutaway portion (180) for providing access to said illumination means, and a removable panel (182) to cover said cutaway portion.

15. A cabinet door of claim 14 wherein said removable panel (182) is made of clear, light-transmitting material.

16. A cabinet door of any one of the preceding claims wherein said second member's planar main surface (40) has hinge-receiving means (64, 66) disposed therein.

**Patentansprüche**

1. Schranktür, umfassend ein erstes Teil (122) mit einer ebenen Hauptfläche (130) und einer Umfangslippe (132—138), ein zweites Teil (124) mit einer ebenen Hauptfläche (140), einer Umfangslippe (142, 146, 150, 154) und einem Umfangsflansch (144, 148, 152, 156) und Befestigungsmittel (162) zur Befestigung des Umfangsflansches (144, 148, 152, 156) des zweiten Teils (124) an dem ersten Teil (122), dadurch gekennzeichnet, daß der Umfangsflansch (44, 48, 52, 56) des zweiten Teils (24) an der ebenen Hauptfläche (40) des ersten Teils (22) befestigt ist, wobei von einem lichtdurchlässigen Bereich (174) der ebenen Hauptfläche (130) des ersten Teils (122) eine Einrichtung (100) zum Betrachten eines Transparentbildes gebildet wird, daß eine Halteeinrichtung (172) zum Festhalten eines Transparentbildes an dem lichtdurchlässigen Bereich und eine Beleuchtungseinrichtung (190) zum Beleuchten des lichtdurchlässigen Bereichs (174) vorgesehen sind.

2. Schranktür nach Anspruch 1, wobei die Umfangslippe des zweiten Teils im wesentlichen rechtwinklig zu der ebenen Hauptfläche (140) angeordnet ist und wobei der Umfangsflansch zu der ebenen Hauptfläche (140) des zweiten Teils im wesentlichen parallel ist.

3. Schranktür nach Anspruch 1 oder 2, wobei die Umfangslippe des ersten Teils unter einem Winkel zwischen 45° und 90° zur der ebenen Hauptfläche (130) angeordnet ist.

4. Schranktür nach einem der Ansprüche 1, 2 und 3, wobei die Befestigungsmittel ·(168) von einem doppelseitigen Klebeband gebildet sind.

5. Schranktür nach einem der vorhergehenden Ansprüche, wobei das erste Teil (1220 und das zweite Teil (124) aus tiefgezogenem Kunststoff bestehen.

6. Schranktür nach Anspruch 5, wobei der Kunststoff durchscheinend ist und eine begrenzte Sicht von hinter der Tür befindlichen Gegenständen ermöglicht.

7. Schranktür nach einem der vorhergehenden Ansprüche, wobei eine dem zweiten Teil (124) gegenüberliegende Seite der ebenen Hauptfläche (130) des ersten Teils eine aufgerauhte kraftfeste Oberfläche hat.

8. Schranktür nach einem der vorhergehenden Ansprüche, wobei das zweite Teil (124) umfaßt:

eine flächenbündige Verlängerung (160) der ebenen Hauptfläche (140), und

eine Verschlußeinrichtung (162) an der flächenbündigen Verlängerung (160), wobei diese Verlängerung an einer Verzweigung zwischen der ebenen Hauptfläche (140) des zweiten Teils und einer abgewinkelten Bodenfläche der Umfangslippe (146) bis näherungsweise zu einer Unterseite der Umfangslippe (134) des ersten Teils angeordnet ist, wenn das erste und das zweite Teil (122, 124) zusammengefügt sind.

9. Schranktür nach Anspruch 8, wobei die Veschlußeinrichtung (162) einen Streifen aus einem magnetischen Material umfaßt.

10. Schranktür nach einem der vorhergehenden Ansprüche, wobei der lichtdurchlässige Bereich (174) einen ausgeschnittenen Bereich (170) in der ebenen Hauptfläche (130) des ersten Teils und eine Scheibe (174) aus einem opalisierenden lichtdurchlässigen Material umfaßt, die neben dem ausgeschnittenen Bereich angeordnet ist.

11. Schranktür nach einem der vorhergehenden Ansprüche, wobei die Halteeinrichtung (172) eine sich nach außen erstreckende Lippe am unteren Ende des ausgeschnittenen Bereichs (170) umfaßt.

12. Schranktür nach einem der vorhergehenden Ansprüche, wobei die Beleuchtungseinrichtung (190) eine Leuchtröhre und eine Lampenfassung umfaßt, die zwischen dem ersten und dem zweiten Teil (122, 124) angeordnet sind.

13. Schranktür nach Anspruch 12, wobei die Lampenfassung an der Innenseite der ebenen Hauptfläche (140) des zweiten Teils befestigt ist.

14. Schranktür nach Anspruch 13, wobei die ebene Hauptfläche (140) des zweiten Teils einen ausgeschnittenen Bereich (180) für den Zugang zu der Beleuchtungseinrichtung und eine abnehmbare Scheibe (182) zum Bedecken des ausgeschnittenen Bereichs aufweist.

15. Schranktür nach Anspruch 14, wobei die abnehmbare Scheibe (182) aus einem klaren lichtdurchlässigen Material hergestellt ist.

16. Schranktür nach einem der vorhergehenden Ansprüche, wobei die ebene Hauptfläche (40) des zweiten Teils mit Mitteln (64, 66) zur Anbringung eines Scharniers versehen ist.

**Revendications**

1. Porte d'armoire comprenant: un premier élément (122) ayant une surface principale plane (130) et une lèvre périphérique (132—138), un second élément (124) ayant une surface principale plane (140), une lèvre périphérique (142, 146, 150, 154) et un rebord périphérique (144, 148, 152, 156), et un moyen de fixation (162) pour attacher le rebord périphérique (144, 148, 152, 156) dudit second élément (124) audit premier élément (122); caractérisée en ce que le rebord périphérique (44, 48, 52, 56) du second élément (24) est fixé à la surface principale plane (40) du premier élément (22), un moyen (100) de visualisation d'une diapositive étant formé d'une portion transmettant la lumière (174) de ladite surface principale plane (130) dudit premier élément (122), d'un moyen de maintien (172) pour supporter une diapositive contre ladite portion transmettant la lumière et d'un moyen d'éclairement (190) pour fournir de la lumière à ladite portion transmettant la lumière (174).

2. Porte d'armoire selon la revendication 1, où la lèvre périphérique du second élément est disposée sensiblement à angle droit avec ladite surface principale plane (140), et ledit rebord périphérique est sensiblement parallèle à ladite surface principale plane (140) du second élément.

3. Porte d'armoire selon la revendication 1 ou 2, où la lèvre périphérique dudit premier élément est disposée à un angle compris entre 45° et 90° par rapport à ladite surface principale plane (130).

4. Porte d'armoire selon l'une quelconque des revendications 1, 2 ou 3, où ledit moyen de fixation (168) est un ruban adhésif double face.

5. Porte d'armoire selon l'une des revendications précédentes, où ledit premier élément (122) et ledit second élément (124) sont faits en matière plastique formée sous vide.

6. Porte d'armoire selon la revendication 5, où ladite matière plastique est translucide, permettant une visibilité limitée des contenus derrière la porte.

7. Porte d'armoire selon l'une quelconque des revendications précédentes, où un côté de la surface principale plane (130) dudit premier élément qui est opposé audit second élément (124) a une surface rendue rugueuse, résistant aux rayures.

8. Porte d'armoire selon l'une quelconque des revendications précédentes, où ledit second élément (124) comprend

une extension coplanaire (160) de ladite surface principale plane (140), et

un moyen de fermeture (162) sur ladite extension coplanaire (160), ladite extension étant disposée à partir d'une jonction, entre ladite surface principale (140) plane du second élément et une surface inférieure en angle de ladite lèvre périphé-rique (146), à peu près jusqu'à une surface inférieure de ladite lèvre périphérique (134) du premier élément, lorsque lesdits premier et second éléments (122, 124) sont assemblés.

9. Porte d'armoire selon la revendication 8, où ledit moyen de fermeture (162) comprend une bande d'un matériau magnétique.

10. Porte d'armoire selon l'une quelconque des revendications précédentes, où ladite portion transmettant la lumière (174) comprend une portion découpée (170) dans la surface principale plane (130) dudit premier élément et un panneau (174) en un matériau opaque et transmettant la lumière qui est disposé adjacent à ladite portion découpée.

11. Porte d'armoire selon l'une quelconque des revendications précédentes, où ledit moyen de maintien (172) comprend une lèvre s'étendant vers l'extérieur à l'extrémité inférieure de ladite portion découpée (170).

12. Porte d'armoire selon l'une quelconque des revendications précédentes, où ledit moyen d'éclairement (190) comprend une lampe floures-cente et un accessoire disposées entre lesdits premier et second éléments (122, 124).

13. Porte d'armoire selon la revendication 12, où ledit accessoire est attaché à une surface interne de ladite surface principale plane (140) du second élément.

14. Porte d'armoire selon la revendication 13, où la surface principale (140) dudit second élément a une portion découpée (180) pour permettre l'accès audit moyen d'éclairement, et un panneau amovible (182) pour couvrir ladite portion découpée.

15. Porte d'armoire selon la revendication 14, où ledit panneau amovible (182) est fait en un matériau transparent et transmettant la lumière.

16. Porte d'armoire selon l'une quelconque des revendications précédentes, où la surface principale plane (40) du second élément a un moyen de réception d'une charnière (64, 66) qui y est dis-posé.

EP 0 132 146 B1

FIG. 1

FIG. 2

FIG. 3

FIG.4

2

FIG.5

FIG.6